# EUROPÄISCHE PATENTANMELDUNG

(11) **EP 2 327 885 A1**
(43) Veröffentlichungstag der Anmeldung: **01.06.2011**
(21) Anmeldenummer: 10191661.7
(22) Anmeldetag: 18.11.2010
(51) Int. Cl.: F16B 12/04, F16B 5/01

(54) **Beschlag**

(30) Priorität: 27.11.2009 DE 202009015659 U
(71) Anmelder: Hettich-Heinze GmbH & Co. KG, 32139 Spenge (DE)
(72) Erfinder: Poppenborg, Norbert, 32105, Bad Salzuflen (DE); Nolte, Frank, 49086, Osnabrück (DE)
(74) Vertreter: Dantz, Jan Henning

(57) **Zusammenfassung**

Ein Beschlag (5), insbesondere zur Montage in einer Leichtbauplatte (3), mit einem Gehäuse mit mindestens einer nach außen offenen Klebemittelkammer (6), welche mit einem im Gehäuse verlaufenden Klebemittelkanal (7) in Verbindung steht, wobei der Klebemittelkanal (7) eine Einlassöffnung zum Anschluss an eine Einspritzdüse für Klebemittel aufweist, wobei die mindestens eine Klebemittelkammer (6) mit einem Indikator (8) zur Anzeige des vollständigen oder nahezu vollständigen Befüllungszustandes der Klebemittelkammer (6) mit einem Kleber versehen ist.

## Beschreibung

Die vorliegende Erfindung betrifft einen Beschlag, insbesondere zur Montage in einer Leichtbauplatte, mit einem Gehäuse mit mindestens einer nach außen offenen Klebemittelkammer, welche mit einem im Gehäuse verlaufenden Klebemittelkanal in Verbindung steht, wobei der Klebemittelkanal eine Einlassöffnung zum Anschluss an eine Einspritzdüse für Klebemittel aufweist.

Es sind Beschläge der vorerwähnten Art bekannt, bei denen die mindestens eine Klebemittelkammer der Innenseite einer stabilen Deckplatte einer Leichtbauplatte gegenüberliegt, so dass der Beschlag über die Grundfläche der Klebemittelkammer hinweg mit der stabilen Deckplatte verklebt werden kann. Hierdurch ergibt sich auch bei Festlegung eines entsprechenden Beschlages in einer Leichtbauplatte eine hoch belastbare Verbindung.

Der vorliegenden Erfindung liegt die Aufgabe zugrunde, einen Beschlag der gattungsgemäßen Art zu schaffen, der eine Kontrolle darüber ermöglicht, wann die mindestens eine Klebemittelkammer ausreichend mit Kleber gefüllt ist.

Diese Aufgabe wird erfindungsgemäß dadurch gelöst, das die mindestens eine Klebemittelkammer mit einem Indikator zur Anzeige des vollständigen oder nahezu vollständigen Befüllungszustandes der Klebemittelkammer mit einem Kleber versehen ist.

Während des Einspritzens von Kleber in den Klebemittelkanal verteilt sich der Kleber bis in die mindestens eine Klebemittelkammer, bis diese vollständig oder nahezu vollständig gefüllt ist. Sobald dieser Zustand erreicht ist, bedeckt der Kleber auch die der offenen Seite der Klebemittelkammer gegenüberliegende Innenfläche einer Deckplatte einer Leichtbauplatte, so dass der Beschlag nach dem Aushärten des Klebers fest und belastbar mit der Deckplatte verbunden ist.

Weitere Klebstoffzufuhr ist nicht erforderlich und in den meisten Fällen sogar unerwünscht, einerseits, um unnötigen Kleberverbrauch zu vermeiden und andererseits um zu verhindern, dass Kleber in den Umgebungsbereich der Verbindung austritt und diesen verschmutzen kann.

Durch den Indikator wird angezeigt, wann die Klebstoffzufuhr abgeschaltet werden kann, wobei sowohl bei manueller Befüllung wie auch bei einer automatischen Befüllung die Anzeige des Indikators das Signal für die Abschaltung der Klebstoffzufuhr gibt.

Nach einer Weiterentwicklung der Erfindung ist vorgesehen, dass der Indikator eine optische Anzeigeeinrichtung aufweist.

Es ist auch denkbar, dass der Indikator eine akustische Anzeigeeinrichtung aufweist.

Eine vorteilhafte Ausgestaltung der Erfindung kann auch darin bestehen, dass der Indikator eine optische und eine akustische Anzeigeeinrichtung aufweist.

Eine optische Anzeigeeinrichtung kann auf einfache Art und Weise dadurch verwirklicht werden, dass diese bei einem aus transluzentem Kunststoff gefertigten Beschlag aus einem begrenzten und hinsichtlich seiner Wandstärke reduzierten Bereich der die Klebemittelkammer nach außen abschließenden Wandung gebildet ist.

Durch diesen in seiner Wandstärke stark reduzierten Bereich wird von außen problemlos erkennbar, wann die Klebemittelkammer ausreichend mit Kleber befüllt ist.

Eine andere Möglichkeit, eine optische Anzeigeeinrichtung zu realisieren, besteht bei einem aus transluzentem Kunststoff gefertigten Beschlag darin, an der Innenseite der die Klebemittelkammer nach außen abschließenden Wandung eine bei Reaktion mit einem Kleber aktivierbare Farbbeschichtung vorzusehen.

Derartige Farbbeschichtungen können bei Reaktion mit einem Kleber eine von außen deutlich erkennbare Verfärbung des beschichteten Bereiches hervorbringen, so dass auch hier ohne weiteres der ausreichende Befüllungszustand der Klebemittelkammer angezeigt wird.

Eine optische Anzeigeeinrichtung kann auch aus beiden Maßnahmen bestehen, d.h., es kann bei einem aus einem transluzenten Kunststoff gefertigten Beschlag ein hinsichtlich seiner Wandstärke reduzierter Bereich vorgesehen sein, der innenseitig mit einer bei Reaktion mit einem Kleber aktivierbaren Farbbeschichtung versehen ist.

Eine akustische Anzeigeeinrichtung kann vorteilhafterweise aus einem membranartigen Bereich der die Klebemittelkammer nach außen abschließenden Wandung bestehen, wobei der membranartige Bereich bei Druckbeaufschlagung durch den Kleber innerhalb der Klebemittelkammer nach außen verformbar ist. Durch diese Verformung des membranartigen Bereiches, der ein Durchdrücken des membranartigen Bereiches nach außen bedingt, kann ein akustisches Signal erzeugt werden, welches den optimalen Befüllungszustand der Klebemittelkammer anzeigt.

Sofern mehrere Klebemittelkammern vorgesehen sind, die über einen gemeinsamen Klebemittelkanal befüllt werden, kann es ausreichend sein, lediglich eine der Klebemittelkammern mit einem Indikator der vorstehenden Art auszustatten. Werden mehrere Klebemittelkammern benutzt und diese einzeln über Klebemittelkanäle befüllt, sollte selbstverständlich jede Klebemittelkammer mit einem Indikator ausgestattet sein.

Ein Ausführungsbeispiel der Erfindung ist in den beigefügten Zeichnungen dargestellt und wird im Folgenden näher beschrieben.

Es zeigen:
- Figur 1: einen Schnitt durch eine Leichtbauplatte mit einem darin eingesetzten erfindungsgemäßen Beschlag
- Figur 2: eine vergrößerte Detaildarstellung eines Teilbereiches des erfindungsgemäßen Beschlages
- Figur 3: eine Ansicht in Richtung des Pfeiles III in Figur 1

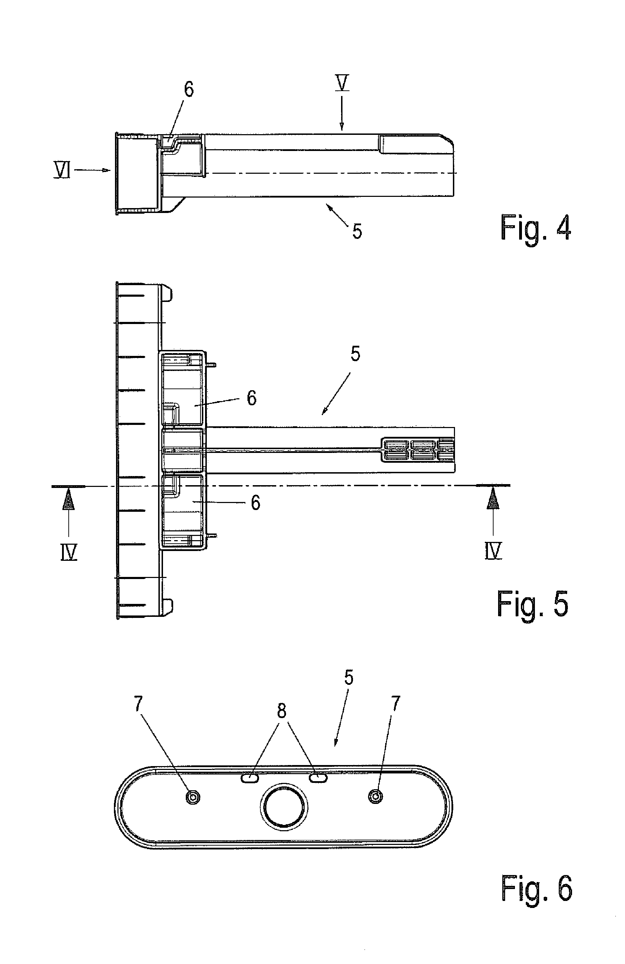

- Figur 4: einen Schnitt nach der Linie IV-IV in Figur 5
- Figur 5: eine Ansicht in Richtung des Pfeiles V in Figur 4
- Figur 6: eine Ansicht in Richtung des Pfeiles VI in Figur 4
- Figuren 7a - c: perspektivische Darstellungen eines erfindungsgemäßen Beschlages während verschiedener Befüllungsphasen von Klebemittelkammern des Beschlages.

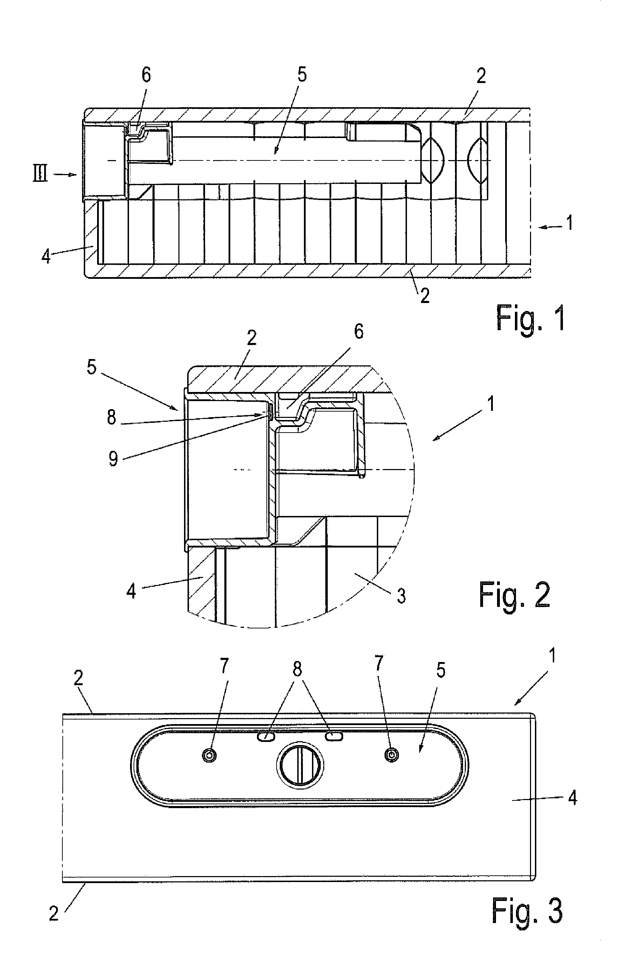

In den Figuren 1 - 3 ist mit dem Bezugszeichen 1 jeweils eine Leichtbauplatte bezeichnet, die im Wesentlichen aus zwei vergleichsweise stabilen Deckplatten 2 und einer dazwischen liegenden Mittelschicht 3 geringerer Festigkeit besteht und die randseitig durch Seitenleisten 4 verschlossen ist. In diese Leichtbauplatte 1 ist ein insgesamt mit dem Bezugszeichen 5 versehener Beschlag eingebracht, der im Bereich mindestens einer Klebemittelkammer 6 mit einer der Deckplatten 2 verklebt ist.

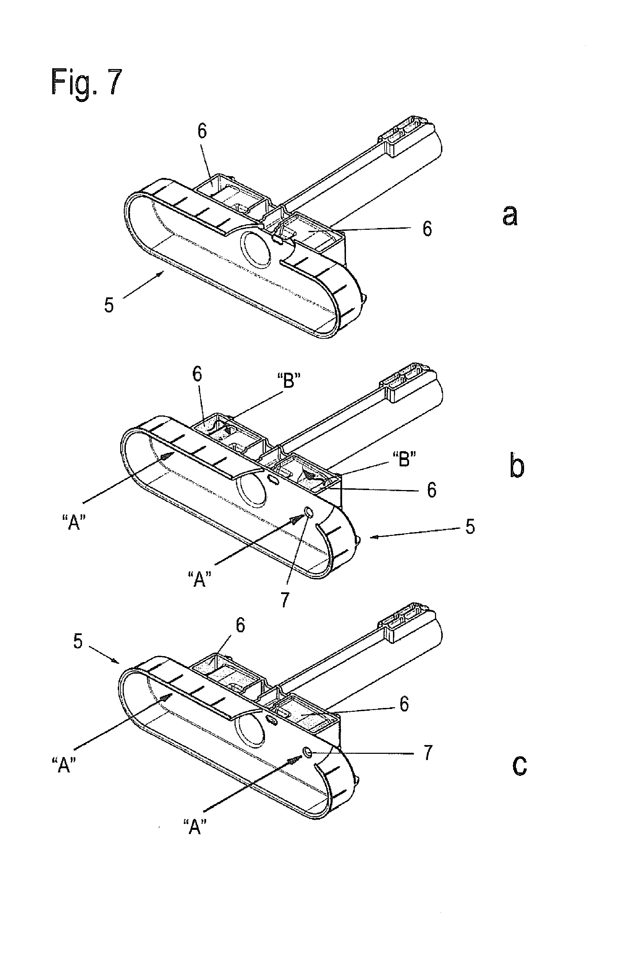

Wie insbesondere die Figuren 2 und 3 in Verbindung mit den Figuren 7a - c deutlich machen, ist der Beschlag 5 im konkreten Fall mit zwei Klebemittelkammern 6 ausgestattet. In jede dieser Klebemittelkammern 6 führt ein Klebemittelkanal 7, durch den ein Kleber in jede der Klebemittelkammern 6 eingefüllt werden kann. Die Klebemittelkammern 6 sind in ihrem der Innenseite einer Deckplatte 2 gegenüberliegenden Bereich offen, so dass in die Klebemittelkammern 6 eingebrachter Kleber die Innenseite der Deckplatte 2 kontaktieren und nach Aushärten für eine feste Verbindung des Beschlages 5 mit einer der Deckplatten 2 Sorge tragen kann.

Im dargestellten Ausführungsbeispiel sind die Klebemittelkammern 6 und die zu der jeweiligen Klebemittelkammer 6 führenden Klebemittelkanäle 7 unabhängig voneinander ausgebildet, d.h., die beiden Klebemittelkammern 6 werden unabhängig voneinander mit einem Kleber befüllt.

Die Figuren 7a - 7c sollen die verschiedenen Phasen beim Befüllen der Klebemittelkammern 6 verdeutlichen.

Figur 7a zeigt den Beschlag 5 vor dem Einbringen von Kleber in die Klebemittelkammern 6. Figur 7b veranschaulicht, dass die Klebemittelkammern 6 schon teilweise mit einem Kleber befüllt sind, wobei der Kleber durch die Klebemittelkanäle 7 in die Klebemittelkammern 6 eingepresst wird in Richtung der Pfeile A und B in Figur 7b. In Figur 7c ist dargestellt, dass die Klebemittelkammern 6 vollständig mit Kleber gefüllt sind und eine Verklebung des Beschlages 5 mit einer Deckplatte 2 einer Leichtbauplatte 1 stattfinden kann.

Um erkennbar zu machen, dass die Klebemittelkammern 6 ausreichend mit Kleber gefüllt sind, ist der Beschlag 5 mit zwei Indikatoren 8 ausgestattet, von denen jeweils einer einer der beiden Klebemittelkammern 6 zugeordnet ist und die Aufgabe hat, den optimalen Befüllungszustand der jeweiligen Klebemittelkammer 6 anzuzeigen.

Bei den Indikatoren 8 kann es sich um solche mit einer optischen Anzeigeeinrichtung, um solche mit einer akustischen Anzeigeeinrichtung oder um solche mit einer Kombination aus einer optischen und akustischen Anzeigeeinrichtung handeln.

Im dargestellten Ausführungsbeispiel ist ein Indikator 8 dargestellt, der eine optische Anzeigeeinrichtung aufweist.

Um diese optische Anzeigeeinrichtung zu realisieren, ist innerhalb der Wandung, welche eine Klebemittelkammer 6 nach außen abschließt, ein begrenzter Bereich 9 vorgesehen, der hinsichtlich seiner Wandstärke gegenüber dem übrigen Wandungsbereich deutlich reduziert ist. Der Beschlag 5 selbst ist aus einem transluzenten Kunststoff hergestellt, so dass durch den hinsichtlich der Wandstärke reduzierten Bereich 9 eine optische Veränderung erkennbar ist zwischen der dahinter liegenden Klebemittelkammer 6 im unbefüllten sowie im befüllten Zustand. Sobald die Klebemittelkammer 6 mit Kleber befüllt ist, wird sich der materialgeschwächte oder materialreduzierte begrenzte Bereich 9 in der besagten Außenwandung verdunkeln, so dass deutlich erkennbar ist, dass die Klebemittelkammer 6 ausreichend mit Kleber befüllt ist.

Alternativ oder ergänzend hierzu kann an der Innenseite der die jeweilige Klebemittelkammer 6 nach außen abschließenden Wandung auch eine Farbbeschichtung vorgesehen sein, welche bei Reaktion mit einem Kleber aktiviert wird. Somit kann sich in diesem Bereich eine vom ursprünglichen Zustand ausgehend abweichende Farbgebung in dem Bereich 9 ergeben und somit ebenfalls eine deutliche und zuverlässige Anzeige des optimalen Befüllungszustandes der Klebemittelkammer 6 stattfinden.

Abweichend vom dargestellten Ausführungsbeispiel ist es auch denkbar, im Bereich der die Klebemittelkammern 6 nach außen abschließenden Wandungen membranartige Bereiche vorzusehen, die durch die Druckbeaufschlagung infolge des in eine Klebemittelkammer 6 eingefüllten Klebers nach außen verformbar sind. Diese Verformung kann infolge eines Durchschlagens des membranartigen Bereiches erfolgen, welches verbunden ist mit einem akustischen Signal.

Für die vorliegende Erfindung ist die äußere Gestalt des Beschlages 5 von untergeordneter Bedeutung. Entscheidend ist, dass ein Beschlag 5 mindestens eine Klebemittelkammer 6 mit einem Klebemittelkanal 7 aufweist und dass im Bereich der Klebemittelkammer 6 ein Indikator 8 zur Anzeige des Befüllungszustandes der Klebemittelkammer 6 vorgesehen ist.

Selbstverständlich kann dabei ein Beschlag 5 auch mit zwei gegenüberliegenden Deckplatten 2 einer Leichtbauplatte 3 verbunden sein und somit Klebemittelkammern 6 aufweisen, die jeweils den einander gegenüberliegenden Deckplatten 2 einer Leichtbauplatte 3 zugeordnet sind. Die Form und Größe der Klebemittelkammern 6 sind von untergeordneter Bedeutung, da es lediglich darauf ankommt, im Bereich der Klebemittelkammern 6 eine Verklebung mit den jeweiligen Deckplatten 2 herbeiführen zu können.

Es ist über das dargestellte Ausführungsbeispiel hinausgehend natürlich auch vorstellbar, die Indikatoren 8 mit allen bislang erwähnten Anzeigeeinrichtungen auszustatten, d.h., es kann eine Kombination von allen angesprochenen Anzeigeeinrichtungen gleichzeitig vorgesehen sein.

### Bezugszeichenliste

- 1: Leichtbauplatte
- 2: Deckplatte
- 3: Mittelschicht
- 4: Seitenleiste
- 5: Beschlag
- 6: Klebemittelkammer
- 7: Klebemittelkanal
- 8: Indikator
- 9: Bereich

## Patentansprüche

1. Beschlag (5), insbesondere zur Montage in einer Leichtbauplatte (3), mit einem Gehäuse mit mindestens einer nach außen offenen Klebemittelkammer (6), welche mit einem im Gehäuse verlaufenden Klebemittelkanal (7) in Verbindung steht, wobei der Klebemittelkanal (7) eine Einlassöffnung zum Anschluss an eine Einspritzdüse für Klebemittel aufweist, **dadurch gekennzeichnet, dass** die mindestens eine Klebemittelkammer (6) mit einem Indikator (8) zur Anzeige des vollständigen oder nahezu vollständigen Befüllungszustandes der Klebemittelkammer (6) mit einem Kleber versehen ist.

2. Beschlag nach Anspruch 1, **dadurch gekennzeichnet, dass** der Indikator (8) eine optische Anzeigeeinrichtung aufweist.

3. Beschlag nach Anspruch 1, **dadurch gekennzeichnet, dass** der Indikator (8) eine akustische Anzeigeeinrichtung aufweist.

4. Beschlag nach Anspruch 1, **dadurch gekennzeichnet, dass** der Indikator (8) eine optische und eine akustische Anzeigeeinrichtung aufweist.

5. Beschlag nach einem der vorhergehenden Ansprüche, **dadurch gekennzeichnet, dass** die optische Anzeigeeinrichtung bei einem aus transluzentem Kunststoff gefertigten Beschlag (5) aus einem begrenzten und hinsichtlich seiner Wandstärke reduzierten Bereich (9) der die Klebemittelkammer (6) nach außen abschließenden Wandung gebildet ist.

6. Beschlag nach einem der vorhergehenden Ansprüche, **dadurch gekennzeichnet, dass** die optische Anzeigeeinrichtung bei einem aus einem transluzenten Kunststoff hergestellten Beschlag (5) aus einer bei Reaktion mit einem Kleber aktivierbaren Farbbeschichtung an der Innenseite der die Klebemittelkammer (6) nach außen abschließenden Wandung gebildet ist.

7. Beschlag nach einem der vorhergehenden Ansprüche, **dadurch gekennzeichnet, dass** die optische Anzeigeeinrichtung bei einem aus transluzentem Kunststoff gefertigten Beschlag (5) aus einem begrenzten und hinsichtlich seiner Wandstärke reduzierten Bereich der die Klebemittelkammer (6) nach außen abschließenden Wandung und aus einer bei Reaktion mit einem Kleber aktivierbaren Farbbeschichtung an der Innenseite der die Klebemittelkammer (6) nach außen abschließenden Wandung gebildet ist.

8. Beschlag nach einem der vorhergehenden Ansprüche, **dadurch gekennzeichnet, dass** die akustische Anzeigeeinrichtung aus einem membranartigen Bereich der die Klebemittelkammer (6) nach außen abschließenden Wandung besteht, wobei der membranartige Bereich bei Druckbeaufschlagung durch den Kleber nach außen verformbar, insbesondere springend verformbar ist.
